# EUROPEAN PATENT APPLICATION

(11) **EP 2 916 616 A2**
(43) Date of publication of application: **09.09.2015**
(21) Application number: 13793398.2
(22) Date of filing: 29.07.2013
(51) Int. Cl.: H04W 88/16

(54) **M2M GATEWAY DEVICE AND APPLYING METHOD THEREOF**

(30) Priority: 30.10.2012 CN 201210424022
(71) Applicant: ZTE Corporation, Shenzhen, Guangdong 518057 (CN)
(72) Inventor: YANG, Kun, Shenzhen Guangdong 518057 (CN)
(74) Representative: Modiano, Micaela Nadia
(86) International application number: PCT/CN2013/080326
(87) International publication number: WO 2013/174349

(57) **Abstract**

Provided are an M2M gateway device and an applying method thereof. The M2M gateway device includes: a communication component 12, configured to communicate with an M2M communication network and an M2M stub network; a management component 14, coupled with the communication component 12, and configured to manage a communication content and/or communication object of the communication with the M2M communication network and/or M2M stub network; and a service component 16, coupled with the communication component 12 and the management component 14, and configured to perform a service operation according to the communication content. The solution solves the problem that the structure of the M2M gateway is not described in the related art, and improves the intelligent degree, usability and uniformity of the M2M gateway device and facilitates the subsequent research and development, operation, management, maintenance and application of the M2M gateway.

## Description

### Technical Field

The present invention relates to the field of communications, and in particular to a machine-to-machine/man communication (referred to as M2M) gateway device and an applying method of the M2M gateway device.

### Background

The architecture of an M2M system may be divided into an M2M application layer, an M2M service capability layer, a communication network layer, an M2M terminal and perception extension layer and a management supporting system.

The M2M terminal and perception extension layer divides M2M terminal devices into two types according to the capabilities of the M2M terminal devices. One type of M2M terminal device is an M2M terminal with the capability of communicating with an M2M communication network. This type of M2M terminal is capable of directly accessing an M2M service platform through a communication network, interacting with the platform to complete registration, certification and authentication of the terminal, and providing perception information required by an application. This type of M2M terminal is mainly used for performing service interaction between the M2M service platform and an application, and can receive management for a terminal peripheral. The other type of M2M terminal device is an M2M gateway with the capability of communicating with an M2M communication network and an M2M stub network. The terminal peripherals are terminals such as sensors for performing environment perception and data collection. The resources of the terminal peripherals, like processing capabilities, storage capabilities and power sources are limited, and only short distance communication can be performed. A single terminal of this kind is named as the terminal peripheral, and a network composed of multiple terminal nodes of this kind is named as the M2M stub network. Although the related art proposes an M2M gateway, the structure of the M2M gateway is not described in the related art.

No effective solution has been presented so far for the problem that the structure of an M2M gateway is not described in the related art.

### Summary

With regard to the problem that the structure of an M2M gateway is not described in the related art, the embodiments of the present invention provide an M2M gateway device and an applying method of the M2M gateway device so as to at least solve the above-mentioned problem.

According to an embodiment of the present invention, an M2M gateway device is provided, including: a communication component, configured to communicate with an M2M communication network and an M2M stub network; a management component, configured to manage a communication content and/or a communication object of the communication with the M2M communication network and/or the M2M stub network; and a service component, configured to perform a service operation according to the communication content.

In an example embodiment, the communication component includes: a network communication element, configured to communicate with an M2M application and/or an M2M service platform in the M2M communication network; and a device communication element, configured to communicate with an M2M terminal peripheral and/or an M2M terminal peripheral group in the M2M stub network.

In an example embodiment, the management component includes: a data management element, configured to, according to a policy, perform data management on data in the communication content of the communication with the M2M communication network and/or the M2M stub network and data in a service operation process, wherein the data management includes at least one of the following: collection, storage, processing and forwarding; an information management element, configured to, according to a policy, perform information management on information about the communication object of the communication with the M2M communication network and/or the M2M stub network, wherein the information management includes at least one of the following: registration, configuration and logout; and a security management element, configured to, according to a policy, perform security management on the communication content and/or a sender of the communication content, wherein the security management includes at least one of the following: access control, integrity protection/verification and key management.

In an example embodiment, the service component includes: a transaction management element, configured to, according to a policy and the communication content of the communication with the M2M communication network and/or the M2M stub network, execute a group of association operations on the communication object of the communication with the M2M stub network; a local management element, configured to, according to the communication content of the communication with the M2M stub network, execute an operation on the communication object of the communication with the M2M stub network; and a remote management element, configured to, according to the communication content of the communication with the M2M communication network, execute an operation on the communication object of the communication with the M2M stub network.

In an example embodiment, the device further includes at least one of the following: a configuration component, configured to configure a policy at an M2M gateway locally; a receiving component, configured to receive a policy issued by the M2M communication network; and a storage component, configured to store a preset policy, or the policy configured by the configuration component, or the policy received by the receiving component.

According to another embodiment of the present invention, a method for applying an M2M gateway device is provided, which is used for the above-mentioned M2M gateway device, the method including: receiving a communication content from the M2M stub network; performing transaction management based on a policy according to the communication content; and/or forwarding the communication content to the M2M communication network.

In an example embodiment, performing the transaction management based on the policy according to the communication content includes: judging whether a transaction triggering condition defined by the policy is satisfied according to the communication content; and based on a judgment result that the transaction triggering condition defined by the policy is satisfied, transmitting an association operation to one or more terminal peripherals in the M2M stub network.

In an example embodiment, after transmitting the association operation to the one or more terminal peripherals in the M2M stub network, the method further includes: according to a reporting situation of the one or more terminal peripherals, processing the association operation based on a policy, wherein the processing includes at least one of the following: timekeeping, retransmission and deletion.

In an example embodiment, after forwarding the communication content to the M2M communication network, the method further includes: receiving and parsing an operation from the M2M communication network; transmitting the parsed operation to the M2M stub network; and acquiring an execution result of the operation from the M2M stub network, and feeding back the execution result to the M2M communication network.

In an example embodiment, after receiving the operation from the M2M communication network, the method further includes: performing integrity verification on information about the operation according to a policy.

In an example embodiment, before forwarding the communication content to the M2M communication network, the method further includes: performing integrity protection on the communication content.

In an example embodiment, after receiving the communication content from the M2M stub network, the method further includes: performing integrity verification on the communication content according to a policy, or performing access control on a sender of the communication content.

In the embodiments of the present invention, the M2M gateway device includes: a communication component **12,** configured to communicate with an M2M communication network and an M2M stub network; a management component **14,** coupled with the communication component **12,** and configured to manage a communication content and/or a communication object of the communication with the M2M communication network and/or the M2M stub network; and a service component **16,** coupled with the communication component **12** and the management component **14,** and configured to perform a service operation according to the communication content. The embodiments of the present invention solve the problem that the structure of the M2M gateway is not described in the related art, and improve the intelligent degree, usability and uniformity of the M2M gateway device and facilitates the subsequent research and development, operation, management, maintenance and application of the M2M gateway.

### Brief Description of the Drawings

Drawings, provided for further understanding of the present invention and forming a part of the specification, are used to explain the present invention together with embodiments of the present invention rather than to limit the present invention. In the drawings:
Fig. 1 is a structural block diagram of an M2M gateway device according to an embodiment of the present invention;
Fig. 2 is an example structural block diagram of a communication component according to an embodiment of the present invention;
Fig. 3 is an example structural block diagram of a management component according to an embodiment of the present invention;
Fig. 4 is an example structural block diagram of a service component according to an embodiment of the present invention;
Fig. 5 is an example structural block diagram of an M2M gateway device according to an embodiment of the present invention;
Fig. 6 is a flowchart of a method for applying an M2M gateway device according to an embodiment of the present invention; and
Fig. 7 is a structural schematic diagram of an M2M gateway device according to an example embodiment of the present invention.

### Detailed Description of the Embodiments

The present invention is described below with reference to the accompanying drawings and embodiments in detail. Note that, the embodiments of the present application and the features of the embodiments can be combined with each other if there is no conflict.

The present embodiment provides an M2M gateway device. As used in the following, the term "component" can achieve a combination with a predefined function of software and/or hardware. Although the apparatus described in the following embodiments is achieved better by using software, hardware or a combination of software and hardware is achievable and is conceived.

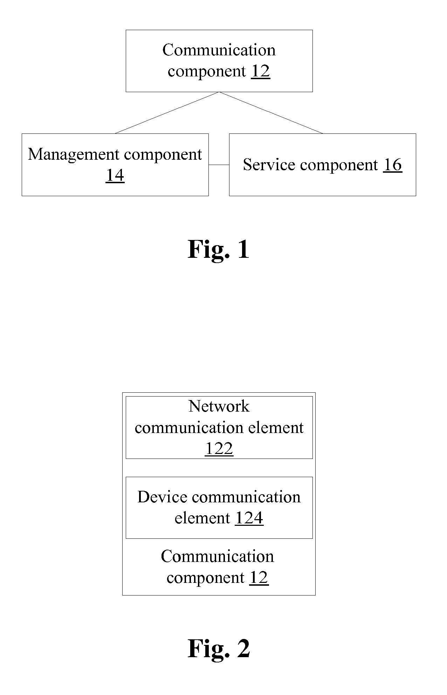

Fig. 1 is a structural block diagram of an M2M gateway device according to an embodiment of the present invention. As shown in Fig. 1, the M2M gateway device includes a communication component **12,** a management component **14** and a service component **16,** and each component is described in details below.

The communication component **12** is configured to communicate with an M2M communication network and an M2M stub network. The management component **14** is coupled with the communication component **12,** and is configured to manage a communication content and/or a communication object of the communication with the M2M communication network and/or the M2M stub network. The service component **16** is coupled with the communication component **12** and the management component **14,** and is configured to perform a service operation according to the communication content.

By means of the above-mentioned components in the present embodiment, the M2M gateway device uses the communication component **12** to communicate with the M2M communication network and the M2M stub network, and uses the management component **14** to manage the communication content and/or the communication object of the communication with the M2M communication network and/or the M2M stub network, and also may use the service component **16** to perform the corresponding service operation according to the communication content. This embodiment solves the problem that the structure of the M2M gateway is not described in the related art, and improves the intelligent degree, usability and uniformity of the M2M gateway device and facilitates the subsequent research and development, operation, management, maintenance and application of the M2M gateway.

Fig. 2 is an example structural block diagram of a communication component **12** according to an embodiment of the present invention. As shown in Fig. 2, the communication component **12** may include: a network communication element **122,** configured to communicate with an M2M application and/or an M2M service platform in the M2M communication network; and a device communication element **124,** configured to communicate with an M2M terminal peripheral and/or an M2M terminal peripheral group in the M2M stub network.

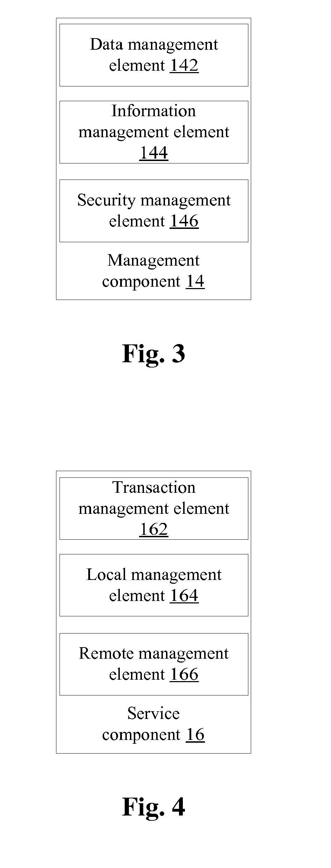

Fig. 3 is an example structural block diagram of a management component **14** according to an embodiment of the present invention. As shown in Fig. 3, the management component **14** may include: a data management element **142,** configured to, according to a policy, perform data management on data in the communication content of the communication with the M2M communication network and/or the M2M stub network and data in a service operation process, wherein the above-mentioned data management may include at least one of the following: collection, storage, processing and forwarding; an information management element **144,** configured to, according to a policy, perform information management on information about the communication object of the communication with the M2M communication network and/or the M2M stub network, wherein the above-mentioned information management may include at least one of the following: registration, configuration and logout; and a security management element **146,** configured to, according to a policy, perform security management on the communication content and/or a sender of the communication content, wherein the above-mentioned security management includes at least one of the following: access control, integrity protection/verification and key management.

Fig. 4 is an example structural block diagram of a service component **16** according to an embodiment of the present invention. As shown in Fig. 4, the service component **16** may include: a transaction management element **162,** configured to, according to a policy and the communication content of the communication with the M2M communication network and/or the M2M stub network, execute a group of association operations on the communication object of the communication with the M2M stub network, wherein the group of association operations on one or more terminal peripherals is named as a transaction, may be a group of operations executed on a single terminal peripheral, and may also be a group of operations executed on multiple terminal peripherals, the successful execution of the transaction needs the fact that all the operations included in the transaction are successfully completed, and if any operation fails, then the execution of the transaction is considered to be a failure; a local management element **164,** configured to, according to the communication content of the communication with the M2M stub network, execute an operation on the communication object of the communication with the M2M stub network; and a remote management element **166,** configured to, according to the communication content of the communication with the M2M communication network, execute an operation on the communication object of the communication with the M2M stub network.

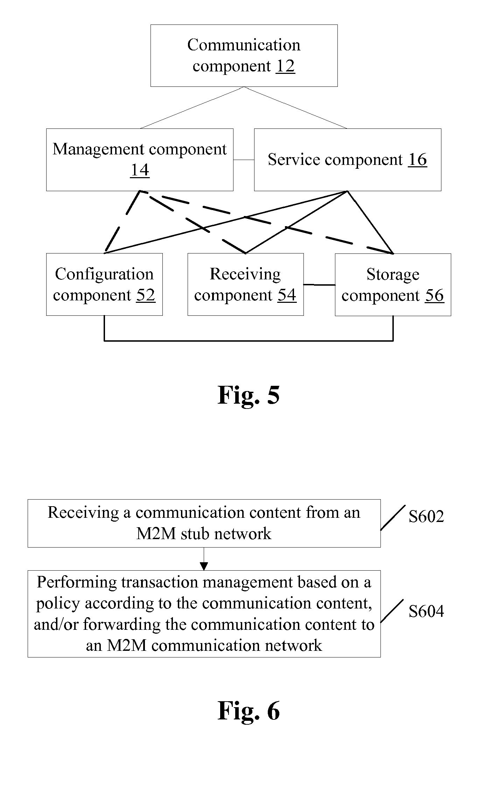

Fig. 5 is an example structural block diagram of an M2M gateway device according to an embodiment of the present invention. As shown in Fig. 5, the M2M gateway device may further include at least one of the following: a configuration component **52,** coupled with the management component **14** and/or the service component **16,** and configured to configure a policy at an M2M gateway locally; a receiving component **54,** coupled with the management component **14** and/or the service component **16,** and configured to receive a policy issued by the M2M communication network; and a storage component **56,** coupled with the management component **14** and/or the service component **16** and the configuration component **52** and the receiving component **54,** and configured to store a preset policy such as a preset policy when a device leaves factory, or also configured to store the policy configured by the configuration component, or also configured to store the policy issued by the M2M communication network and received by the receiving component.

By means of the above-mentioned M2M gateway device, aside from connecting an M2M stub network and a perception device with a network, an M2M gateway can also receive management information about an M2M stub network node and perform protocol conversion between the M2M stub network and the M2M communication network.

The M2M stub network is composed of nodes, such as sensors having the capabilities of information collection, simple processing and communication, and the purposes thereof are collaborative perception, collecting relevant information about a monitored object within a network coverage range and transmitting monitoring data to the M2M gateway. The M2M gateway transmits via a communication network the perception data to an M2M service platform or application for analysis and processing.

A terminal peripheral refers to a single device such as a sensor having an environment perception function, can transmit perceived information to the M2M service platform via the M2M gateway or M2M terminal, and also can receive downlink control of the M2M application or the M2M service platform.

The M2M stub network and the terminal peripheral have features such as limited processing capability, storage capability and power source, thus cannot communicate with a communication network directly and need to access the communication network via the M2M gateway. By means of the above-mentioned M2M gateway device, the M2M gateway can perform the protocol conversion between the M2M stub network and an upper network. Apart from converging and forwarding data information collected by the M2M stub network and the terminal peripheral, the M2M gateway can also receive control information about the M2M service platform and manage the M2M stub network and the terminal peripheral.

Based on the above-mentioned M2M gateway device, a method for applying an M2M gateway device is further provided in the present embodiment. Fig. 6 is a flowchart of a method for applying an M2M gateway device according to an embodiment of the present invention. As shown in Fig. 6, the method includes the steps as follows:
step S602, receiving a communication content from an M2M stub network; and
step S604, performing transaction management based on a policy according to the communication content; and/or forwarding the communication content to an M2M communication network.

By means of the above-mentioned applying method in the present embodiment, the M2M gateway device uses the communication component **12** to communicate with the M2M communication network and the M2M stub network, and uses the management component **14** to manage the communication content and/or the communication object of the communication with the M2M communication network and/or the M2M stub network, and also can use the service component **16** to perform the corresponding service operation according to the communication content. The method solves the problem that the structure of the M2M gateway is not described in the related art, and proposes the corresponding applying method based on the described structure of the M2M gateway, which improves the intelligent degree, usability and uniformity of the M2M gateway device and facilitates the subsequent research and development, operation, management, maintenance and application of the M2M gateway.

In an example embodiment, after receiving a communication content from an M2M stub network, the above-mentioned M2M gateway device may be applied to detect the security of the local access, for example, integrity verification may be performed on the above-mentioned communication content according to a policy, or access control may be performed on a sender of the above-mentioned communication content. In addition, before forwarding the above-mentioned communication content to the M2M communication network, the M2M gateway device may also be applied to perform integrity protection on the communication content.

As an example embodiment, the manner of the M2M gateway device performing transaction management based on the policy according to the communication content may be as follows: according to the communication content, it is judged whether a transaction triggering condition defined by the policy is satisfied; and if a judgement result is that the transaction triggering condition corresponding to the policy is satisfied, an association operation may be sent to one or more terminal peripherals in the M2M stub network. The association operation is a set of a series of operations executed for achieving expected purposes, may be a group of association operations sent to one or more terminal peripherals, and may also be group association operations sent to one or more terminal peripheral groups in the M2M stub network. The manner achieves the intelligent management and control of the M2M gateway device.

In an example embodiment, after transmitting an association operation to one or more terminal peripherals in the M2M stub network, the M2M gateway device may also process, according to a reporting situation of the one or more terminal peripherals, the association operation based on a policy, wherein the processing may include at least one of the following: timekeeping, retransmission and deletion. The manner improves the reliability of achieving the intelligence of the M2M gateway device.

As an example embodiment, after forwarding the communication content to an M2M communication network, the M2M gateway device may receive and parse an operation from the M2M communication network, transmit the parsed operation to the M2M stub network, and acquire an execution result of the operation from the M2M stub network, and feed back the execution result to the M2M communication network.

In an example embodiment, after an operation from the M2M communication network is received, the security of a remote access may also be detected, for example, integrity verification may be performed on information corresponding to the operation according to a policy.

The solution provided by the above embodiments of the present invention is illustrated below in combination with example embodiments, and the following example embodiments combine the above-mentioned embodiments and the example embodiments thereof.

An M2M gateway device is provided in the following example embodiments. The functions and achievement methods of the existing M2M gateway vary at present and there is no unified specification. On that account, a functional architecture of an M2M gateway and the achievement method thereof are provided in the following example embodiments so that the M2M gateway conforms to certain protocol standards, and the management of a terminal peripheral and/or a terminal peripheral group by the M2M gateway and the interaction of the terminal peripheral and/or the terminal peripheral group with an M2M application or an M2M service platform via the M2M gateway are achieved.

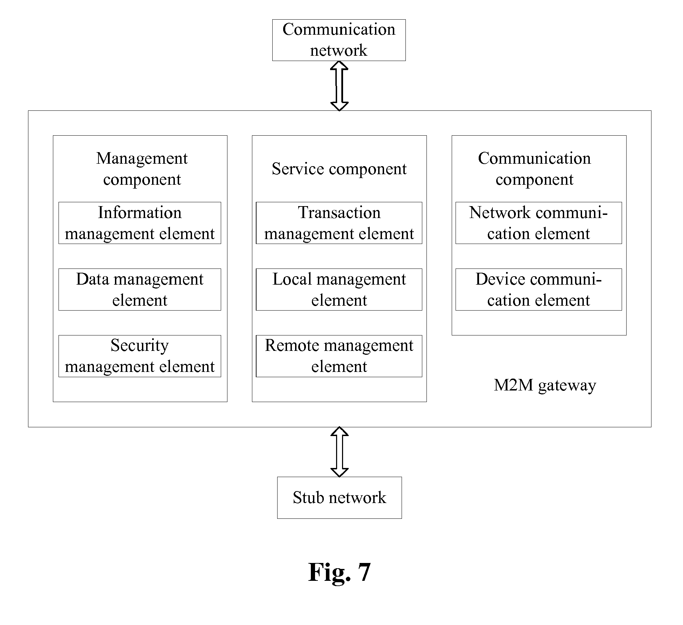

The present example embodiment provides an M2M gateway device. Fig. 7 is a structural schematic diagram of an M2M gateway device according to an example embodiment of the present invention. As shown in Fig. 7, the M2M gateway device includes a communication component, a service component and a management component. The above-mentioned communication component is configured to achieve a communication function of an M2M gateway. The above-mentioned management component is configured to achieve a management function of the M2M gateway. The above-mentioned service component is configured to achieve a service function of the M2M gateway.

In an example embodiment, the communication component of the M2M gateway may also include a network communication element and a device communication element. The above-mentioned network communication component is configured to achieve a communication function between the M2M gateway and an M2M application or an M2M service platform. The above-mentioned device communication element is configured to achieve a communication function between the M2M gateway and a terminal peripheral and/or a terminal peripheral group.

In an example embodiment, the service component of the M2M gateway may also include a transaction management element (also referred to as a policy control element), a remote management element and a local management element. The above-mentioned transaction management element is configured to achieve a transaction management function of the M2M gateway for a terminal peripheral and/or a terminal peripheral group. The above-mentioned remote management element is configured to achieve a remote management function of the M2M gateway for the terminal peripheral and/or the terminal peripheral group. The above-mentioned local management element is configured to achieve a local management function of the M2M gateway for the terminal peripheral and/or the terminal peripheral group.

In an example embodiment, the management component of the M2M gateway may also include a data management element, an information management element and a security management element. The above-mentioned data management element is configured to achieve a data management function based on a policy of the M2M gateway for a terminal peripheral and/or a terminal peripheral group. The above-mentioned information management element is configured to achieve an information management function based on the policy of the M2M gateway for the terminal peripheral and/or the terminal peripheral group. The above-mentioned security management element is configured to achieve a security management function based on the policy of the M2M gateway for M2M gateway communication.

In an example embodiment, the above-mentioned policy may be set by a user locally, may also be issued by an M2M application or an M2M service platform and may also be preset when a device leaves factory.

### Embodiment 1

The present example embodiment describes a realization procedure of using the above-mentioned M2M gateway device to perform information data management and verification of an illegal remote access, and the procedure includes the steps as follows.

Step one, a device communication element of a communication component of an M2M gateway receives data sent by a terminal peripheral and/or a terminal peripheral group. The data may be information data of the terminal peripheral and/or the terminal peripheral group, such as node information, state information and capability information.

Step two, an information management element of a management component of the M2M gateway parses the information data of the terminal peripheral and/or the terminal peripheral group, and searches whether there is context information about the terminal peripheral and/or the terminal peripheral group in locally stored information.

If the information does not exist, after registering the terminal peripheral and/or the terminal peripheral group according to a policy, the information management element of the management component of the M2M gateway stores the information data and performs integrity protection on the data and forwards the information data to an M2M service platform via a network communication element of the communication component of the M2M gateway.

If the information already exists, the information management element of the management component of the M2M gateway stores the information data and performs integrity protection on the data and forwards the information data to an M2M service platform via a network communication element of the communication component of the M2M gateway.

Step three, after receiving the information data of the terminal peripheral and/or the terminal peripheral group sent by the M2M gateway, the M2M service platform stores the information data.

Step four, an M2M application acquires the information data of the terminal peripheral and/or the terminal peripheral group from the M2M service platform via information query and information feedback information.

Step five, after the M2M application receives the information data fed back by the M2M service platform, a service logical judgement triggers the M2M application to perform remote management, i.e., issuing a remote management operation to a remote management element of a service component of the M2M gateway. The above-mentioned management may include monitoring and fault management, performance management and software/firmware management, etc.

Step six, after receiving operation information issued by the M2M application, the network communication element of the communication component of the M2M gateway performs access control on the M2M application, and a security management element of the management component of the M2M gateway performs integrity verification on the operation information according to a policy so as to avoid an illegal remote access and records an operation attempt and/or generates a security warning prompt.

Step seven, after the security management element of the management component of the M2M gateway completes the integrity verification on the operation information, the network communication element of the communication component of the M2M gateway transmits the operation information to the remote management element of the service component of the M2M gateway.

Step eight, after receiving the operation information, the remote management element of the service component of the M2M gateway parses and/or stores the operation information, and the device communication element of the communication component of the M2M gateway is used to issue the operation information to the corresponding terminal peripheral and/or the terminal peripheral group.

Step nine, after receiving the operation information, the terminal peripheral and/or the terminal peripheral group parse the operation information and execute the corresponding operation, and the device communication element of the communication component of the M2M gateway is used to report an execution result to the remote management element of the service component of the M2M gateway.

Step ten, the remote management element of the service component of the M2M gateway processes the operation information according to a policy and the reporting situation of the terminal peripheral and/or the terminal peripheral group, and uses the network communication element of the communication component of the M2M gateway to feed back the execution result of the remote management operation to the M2M application. The processing may include operations such as timekeeping, retransmission and deletion. The execution result may be an execution success indication and a state value after the terminal peripheral and/or the terminal peripheral group execute the operation successfully, or an execution failure indication and a cause value of the failure.

### Embodiment 2

The present example embodiment describes a realization procedure of using the above-mentioned M2M gateway device to perform data monitoring and verification of an illegal local access, and the procedure includes the steps as follows.

Step one, a device communication element of a communication component of an M2M gateway receives data sent by a terminal peripheral and/or a terminal peripheral group. The data may be monitoring data of the terminal peripheral and/or the terminal peripheral group, such as temperature, humidity and brightness.

Step two, a security management element of a management component of the M2M gateway performs access control on the terminal peripheral and/or the terminal peripheral group according to a policy, and performs integrity verification on the data so as to avoid an illegal local access and records an operation attempt and/or generates a security warning prompt.

Step three, after the security management element of the management component of the M2M gateway completes the integrity verification on the data, the device communication element of the communication component of the M2M gateway transmits the data to a data management element of the management component of the M2M gateway.

Step four, after receiving the data, the data management element of the management component of the M2M gateway manages the data according to a policy. The above-mentioned management may include operations such as collection, storage, processing and forwarding.

In an example embodiment, in an implementation process, the data may be firstly collected according to a basis indicated by the policy, for example, establishing a data collection list to filtrate the data.

Next, the collected data is stored according to the manner indicated by the policy, for example, establishing a data storage list to store the data according to categories.

Then, the stored data is processed according to the manner indicated by the policy, for example, establishing a data level list and then setting retrieval frequencies of different categories of data according to priorities of the data.

At last, the retrieved data is forwarded according to a target indicated by the policy, for example, establishing a data forwarding list and forwarding the specified data category to a specified M2M gateway functional component and element, such as a transaction management element of a service component of an M2M gateway.

Step five, after receiving the monitoring data, the transaction management element of the service component of the M2M gateway executes transaction management according to a policy, i.e., using the device communication element of the communication component of the M2M gateway to issue an association operation to the terminal peripheral and/or the terminal peripheral group.

In an example embodiment, in the implementation process, it can be firstly detected, according to a transaction triggering condition such as a transaction triggering threshold value defined by the policy, whether the monitoring data satisfies the transaction triggering condition.

Then, the corresponding association operation is queried according to the triggered transaction.

At last, the device communication element of the communication component of the M2M gateway is used to issue the data to the terminal peripheral and/or the terminal peripheral group corresponding to the association operation.

Step six, after receiving the association operation, the terminal peripheral and/or the terminal peripheral group parse the association operation and execute the corresponding operation, and the device communication element of the communication component of the M2M gateway is used to report an execution result to the transaction management element of the service component of the M2M gateway.

Step seven, the transaction management element of the service component of the M2M gateway processes the association operation according to a policy and the reporting situation of the terminal peripheral and/or the terminal peripheral group, and uses the network communication element of the communication component of the M2M gateway to report the execution result of the association operation to an M2M service platform. The above-mentioned processing may include operations such as timekeeping, retransmission and deletion. The execution result may be an execution success indication and a state value after the terminal peripheral and/or the terminal peripheral group execute the operation successfully, or an execution failure indication and a cause value of the failure.

In another embodiment, a kind of software is further provided, and the software is used to execute the technical solutions described in the above-mentioned embodiments and example embodiments.

In another embodiment, a storage medium is further provided, and the storage medium has stored the above-mentioned software, and the storage medium includes but is not limited to optical disk, floppy disk, hard disk, erasable storage, and the like.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection defined by the claims of the present invention.

## Claims

1. A machine-to-machine/man (M2M) communication gateway device, **characterized by** comprising:
a communication component, configured to communicate with an M2M communication network and an M2M stub network;
a management component, configured to manage a communication content and/or a communication object of the communication with the M2M communication network and/or the M2M stub network; and
a service component, configured to perform a service operation according to the communication content.

2. The M2M gateway device according to claim 1, **characterized in that** the communication component comprises:
a network communication element, configured to communicate with an M2M application and/or an M2M service platform in the M2M communication network; and
a device communication element, configured to communicate with an M2M terminal peripheral and/or an M2M terminal peripheral group in the M2M stub network.

3. The M2M gateway device according to claim 1, **characterized in that** the management component comprises:
a data management element, configured to, according to a policy, perform data management on data in the communication content of the communication with the M2M communication network and/or the M2M stub network and data in a service operation process, wherein the data management comprises at least one of the following: collection, storage, processing and forwarding;
an information management element, configured to, according to a policy, perform information management on information about the communication object of the communication with the M2M communication network and/or the M2M stub network, wherein the information management comprises at least one of the following: registration, configuration and logout; and
a security management element, configured to, according to a policy, perform security management on the communication content and/or a sender of the communication content, wherein the security management comprises at least one of the following: access control, integrity protection/verification and key management.

4. The M2M gateway device according to claim 1, **characterized in that** the service component comprises:
a transaction management element, configured to, according to a policy and the communication content of the communication with the M2M communication network and/or the M2M stub network, execute a group of association operations on the communication object of the communication with the M2M stub network;
a local management element, configured to, according to the communication content of the communication with the M2M stub network, execute an operation on the communication object of the communication with the M2M stub network; and
a remote management element, configured to, according to the communication content of the communication with the M2M communication network, execute an operation on the communication object of the communication with the M2M stub network.

5. The M2M gateway device according to any one of claims 1 to 4, **characterized by** further comprising at least one of the following:
a configuration component, configured to configure a policy at an M2M gateway locally;
a receiving component, configured to receive a policy issued by the M2M communication network; and
a storage component, configured to store a preset policy, or the policy configured by the configuration component, or the policy received by the receiving component.

6. A method for applying a machine-to-machine/man (M2M) communication gateway device, **characterized in that** the method is used for the M2M gateway device as claimed in any one of claims 1 to 5 and comprises:
receiving a communication content from the M2M stub network;
performing transaction management based on a policy according to the communication content; and/or forwarding the communication content to the M2M communication network.

7. The method according to claim 6, **characterized in that** performing the transaction management based on the policy according to the communication content comprises:
judging whether a transaction triggering condition defined by the policy is satisfied according to the communication content; and
based on a judgment result that the transaction triggering condition defined by the policy is satisfied, transmitting an association operation to one or more terminal peripherals in the M2M stub network.

8. The method according to claim 7, **characterized in that** after transmitting the association operation to the one or more terminal peripherals in the M2M stub network, the method further comprises:
according to a reporting situation of the one or more terminal peripherals, processing the association operation based on a policy, wherein the processing comprises at least one of the following: timekeeping, retransmission and deletion.

9. The method according to claim 6, **characterized in that** after forwarding the communication content to the M2M communication network, the method further comprises:
receiving and parsing an operation from the M2M communication network;
transmitting the parsed operation to the M2M stub network; and
acquiring an execution result of the operation from the M2M stub network, and feeding back the execution result to the M2M communication network.

10. The method according to claim 9, **characterized in that** after receiving the operation from the M2M communication network, the method further comprises:
performing integrity verification on information about the operation according to a policy.

11. The method according to claim 6, **characterized in that** before forwarding the communication content to the M2M communication network, the method further comprises:
performing integrity protection on the communication content.

12. The method according to any one of claims 6 to 11, **characterized in that** after receiving the communication content from the M2M stub network, the method further comprises:
performing integrity verification on the communication content according to a policy, or performing access control on a sender of the communication content.
